# FASCICULE DE BREVET EUROPEEN

(11) **EP 2 427 371 B1**
(45) Date de publication et mention de la délivrance du brevet: **20.11.2013**
(21) Numéro de dépôt: 10727086.0
(22) Date de dépôt: 03.05.2010
(51) Int. Cl.: B64C 11/46, B64D 15/12

(54) **DISPOSITIF DE DÉGIVRAGE ÉLECTRIQUE POUR PALES DE PROPULSEUR DE TYPE PROPFAN**
ENTEISUNGSSYSTEM FÜR PROPELLERBLÄTTER EINES PROPFAN-TRIEBWERKS
PROPFAN BLADE DEICING SYSTEM

(30) Priorité: 05.05.2009 FR 0952970
(43) Date de publication de la demande: 14.03.2012
(73) Titulaire: Airbus Operations (S.A.S.), 31060 Toulouse (FR)
(72) Inventeur: BULIN, Guillaume, F-31700 Blagnac (FR); PERRET, Séverine, F-31490 Leguevin (FR)
(74) Mandataire: Sarraméa, Claude
(86) Numéro de dépôt international: PCT/FR2010/050841
(87) Numéro de publication internationale: WO 2010/128239

(56) Documents cités:
- WO-A-03/078248
- WO-A1-2006/124026
- DE-A1- 19 946 806
- FR-A- 950 666
- FR-A- 2 645 499
- US-A- 2 391 994

## Description

La présente invention relève du domaine des équipements aéronautiques. Elle concerne plus spécifiquement les dispositifs de dégivrage. Dans le cas présent, elle vise en particulier le problème du dégivrage de pales d'hélices.

Lors des différentes phases de vol, et en particulier au sol, au décollage, en montée, ou à l'atterrissage, les aéronefs sont régulièrement soumis à des conditions atmosphériques givrantes (surface froide + humidité ambiante), qui amènent la création de dépôts de glace sur diverses parties du fuselage. Ces dépôts de glace modifient les performances aérodynamiques de l'appareil, augmentent sa masse et réduisent sa manoeuvrabilité.

Divers dispositifs d'anti-givrage (empêchant la glace de se former sur une surface de l'appareil) ou de dégivrage (décoller les morceaux de glace une fois celle-ci formée) ont été développés depuis des décennies, et sont déjà connus de l'homme de l'art. Ils utilisent par exemple pour les bords d'attaque des ailes des résistances chauffantes, alimentées par une source d'électricité prévue à cet effet, provoquant la fonte de la glace et sa rupture en morceaux entraînés par le flux d'air. De même sont utilisées des membranes gonflables par intermittence pour briser la glace en cours de formation.

Le document de brevet des Etats-Unis publié sous la référence US 2,391,994 décrit ainsi un système de dégivrage des ailes d'un aéronef à hélices, ailes par nature fixes, qui utilise des moyens de dégivrage électriques alimentés par un générateur thermoélectrique constitué par des thermocouples placés dans le conduit d'évacuation des gaz brulés des moteurs de l'aéronef.

Il est évident que des problèmes analogues de lutte contre le givrage, par anti-givrage ou dé-givrage, se posent pour les pales des hélices dans le cas d'avions propulsés par hélices. Dans ce cas, des résistances chauffantes sont généralement utilisées, avec un générateur électrique installé dans l'axe de l'hélice et un transfert de courant vers des câbles passant à travers cet axe vers les différentes pales (voir par exemple le document brevet WO 97/24261).

La quantité d'énergie nécessaire à assurer un anti-givrage permanent des pales entraîne alors généralement le choix préférentiel d'un chauffage de pales les unes après les autres de façon cyclique. Ce mode de dégivrage à intervalle régulier réduit la puissance électrique nécessaire et la taille du générateur.

Par contre, dans le cas des propulseurs du type connu sous le nom générique de «propfan», comportant deux hélices contrarotatives à rotor ouvert (non caréné), entraînées par une boite de vitesse différentielle, elle même mue par une turbomachine, les hélices sont disposées de façon annulaire autour du coeur de cette turbomachine, et cette disposition empêche l'utilisation des dispositifs précédemment cités.

On connaît par ailleurs des dispositifs de contacts tournants assurant une transmission d'énergie électrique entre un axe fixe et une partie annulaire mobile par utilisation de balais électro-conducteurs fixés sur l'axe et qui viennent glisser sur une piste annulaire de la partie tournante.

Le document de brevet français publié sous la référence FR 950.666 décrit ainsi un dispositif de production d'électricité localisé au niveau des hélices d'un moteur d'avion, qui comporte une ou deux génératrices magnétoélectriques montées sur les arbres d'hélices, dont les circuits inducteurs sont alimentés en électricité par l'intermédiaire de balais conducteurs tournants.

Selon ce même principe, la demande internationale publiée sous la référence WO 2006/124026 décrit un système de gestion du dégivrage des éléments d'un hélicoptère qui comporte notamment des moyens pour réaliser le dégivrage des pales du rotor principal en alimentant des moyens électriques de dégivrage à travers des couronnes collectrices.

Dans le cas présent, la puissance à transférer pour dégivrer les pales d'un «propfan» approche une vingtaine de kilowatts, ce qui implique des dispositifs de taille significative. Un des inconvénients principaux de ces systèmes à contacts tournants est lié à la vitesse relative des balais par rapport à la piste mobile, cette vitesse étant généralement proche de cent mètres par seconde et fonction naturellement du diamètre de la piste annulaire et de la vitesse de rotation de cette partie.

Il s'ensuit pour tous ces systèmes à contacts tournants une usure rapide des balais, qui entraîne une réduction de leurs performances et un besoin de maintenance régulière et coûteuse. L'absence de lubrification de ces balais (pour des raisons de complexité) contribue également à réduire significativement cette durée de vie.

Dans le cas de l'hélice frontale d'un «propfan», le diamètre du coeur de la turbomachine amène une vitesse relative de la partie mobile par rapport à la partie statique de l'ordre de quatre cents mètres par seconde, ce qui rend les systèmes à balais et piste mobile inutilisables en pratique, car dépassant les spécifications des dispositifs disponibles dans le commerce.

La situation est encore aggravée dans le cas de «propfan» par le caractère contrarotatif des deux hélices.

Enfin, le «propfan» se caractérise par la température élevée du flux de gaz qu'il génère, autour de 800°C en sortie, ce flux de gaz d'échappement venant passer entre l'axe du propulseur et les deux hélices, et rendant difficile l'installation de matériels pouvant souffrir de conditions de température élevée.

L'objectif de la présente invention est alors de proposer un dispositif de dégivrage / antigivrage de pales de propulseur de type «propfan», qui évite les inconvénients pré-cités.

A cet effet, l'invention vise un propulseur de type dit «propfan», ledit propulseur comportant une turbomachine entraînant en rotation au moins un rotor comprenant une pluralité de pales disposées autour d'une couronne annulaire mobile avec ces pales, venant former par sa paroi externe une partie de l'enveloppe externe du propulseur, ladite enveloppe externe étant soumise aux conditions atmosphériques externes au propulseur, ladite turbomachine générant un flux de gaz chauds s'échappant par une veine chaude annulaire, concentrique de la couronne annulaire mobile, et déterminée pour une partie de sa surface par la paroi interne de ladite couronne annulaire mobile ,
le dispositif de dégivrage comportant :
- au sein de la partie annulaire mobile, des moyens de transformation de l'énergie thermique en énergie électrique,
- des moyens de transfert de l'énergie électrique générée vers les pales du rotor,
- des moyens de transformation de l'énergie électrique en énergie thermique sur une partie au moins de la surface desdites pales.

Préférentiellement, les moyens de transformation de l'énergie thermique en énergie électrique comprennent un générateur électrique composé d'un ensemble de diodes thermoélectriques utilisant l'effet Seebeck, disposées entre la paroi interne et la paroi externe de la couronne annulaire, faisant office respectivement de source chaude et de source froide de ces diodes, lesdites diodes thermoélectriques étant organisées en groupements en série et en parallèle de manière à obtenir en sortie du générateur électrique une tension et un ampérage compatible avec les besoins de dégivrage des pales du rotor.

Selon un mode de réalisation avantageux, les diodes thermoélectriques sont du type Pb _{0.5} Sn _{0.5} Te.

Selon un mode de réalisation avantageux, des caloducs sont disposés entre une des parois de la couronne annulaire et une face des diodes thermoélectriques.

Alternativement, le dispositif de dégivrage de pales comprend des moyens de canaliser soit de l'air chaud de la veine chaude annulaire, soit de l'air extérieur, vers une paroi sur laquelle sont disposées les diodes thermoélectriques.

On comprend qu'il est nécessaire d'accommoder la distance existant dans le propulseur entre les zones chaudes et froides en vue de leur utilisation comme sources chaudes et froides de diodes thermoélectriques.

Selon diverses dispositions éventuellement utilisées en conjonction :
- le générateur électrique d'étend de façon annulaire sur sensiblement tout le périmètre intérieur de la couronne annulaire,
- dans le cas d'un rotor comprenant n pales, chaque secteur de 360°/n du générateur électrique alimente une pale en énergie électrique avec une puissance adaptée à son dégivrage,
- le dispositif comporte des moyens de régulation de la différence de température entre les sources chaude et froide des diodes thermoélectriques, pilotés selon les consignes d'une électronique de contrôle du courant généré par les diodes.

On comprend que cette dernière disposition permet de créer un processus de feedback maximisant en temps réel le rendement énergétique des diodes thermoélectriques.

De manière à optimiser l'utilisation de l'énergie générée par le générateur électrique, celui-ci comporte favorablement une électronique de contrôle à laquelle toutes les diodes fournissent le courant généré, cette électronique de contrôle étant adaptée à mesurer la puissance électrique disponible, et à la répartir entre les pales, et à sélectionner un mode d'alimentation cyclique des pales en cas de puissance générée inférieure à un seuil prédéterminé.

Le seuil sera choisit de façon à caractériser le moment ou la puissance générée est insuffisante pour une alimentation en parallèle permanente de toutes les pales.

Préférentiellement, les résistances chauffantes des pales sont alimentées en permanence, et en ce que toutes les pales sont alimentées simultanément.

La description qui va suivre, donnée uniquement à titre d'exemple d'un mode de réalisation de l'invention, est faite en se référant aux figures annexées dans lesquelles :
la figure 1 montre un propulseur de type «propfan», auquel l'invention peut être appliquée,
la figure 2 illustre en vue en coupe très schématisée un tel propulseur,
la figure 3 montre de façon schématique le principe de montage d'un générateur électrique à effet Seebeck,
la figure 4 montre la densité de puissance électrique qui peut être obtenue avec une diode thermoélectrique du commerce, selon la différence de température disponible,
la figure 5 illustre un dispositif de dégivrage de pales selon l'invention,
la figure 6 illustre un exemple de mise en oeuvre des diodes thermoélectriques sur les deux rotors du « propfan ».

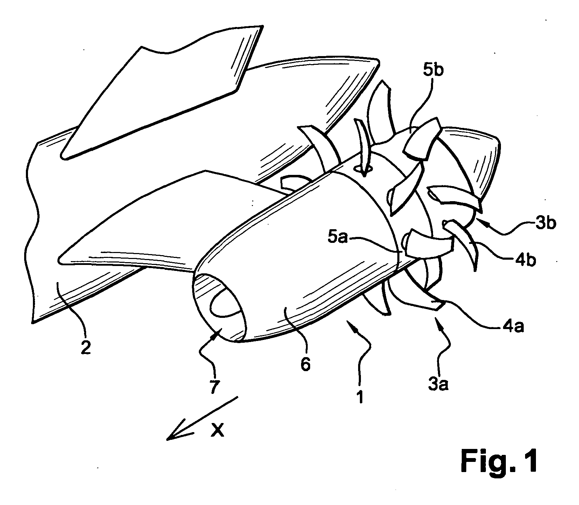

L'invention est destinée à être utilisée dans un propulseur 1 d'avion, par exemple de type dit "propfan", tel qu'illustré figure 1. De tels propulseurs sont envisagés pour des aéronefs futurs. Dans l'exemple de mise en oeuvre illustré ici, deux propulseurs «propfan» 1 sont fixés, par des mats de support, de part et d'autre de la partie arrière du fuselage 2 d'un aéronef.

Chaque propulseur «propfan» 1 comporte ici deux rotors contrarotatifs 3a, 3b comportant chacun un ensemble de pales 4a, 4b équidistantes, et disposés en partie arrière du propulseur 1. Les pales 4a, 4b de chaque rotor 3a, 3b font saillie d'une couronne annulaire 5a, 5b mobile avec ce rotor, dont la surface externe se place dans la continuité de l'enveloppe extérieure 6 du propulseur.

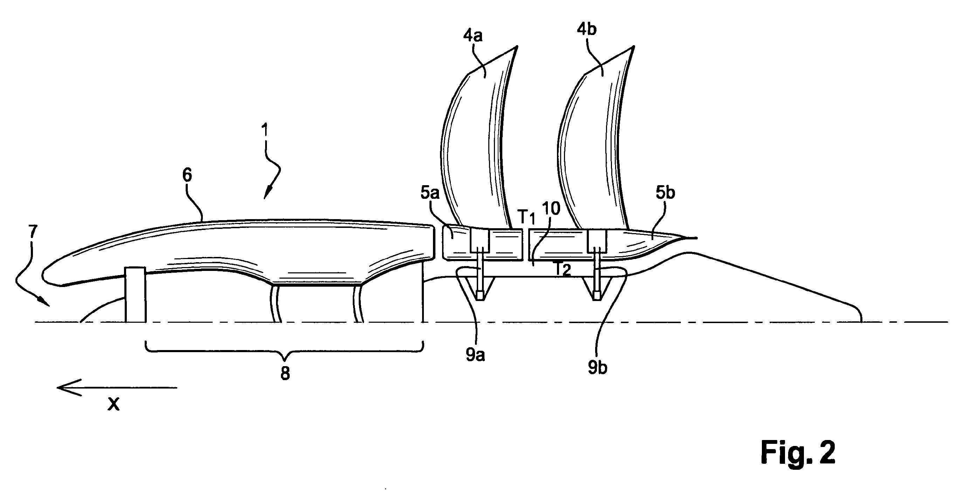

Comme on le voit sur la figure 2 de façon schématique, le propulseur «propfan» 1 comporte une entrée d'air 7 qui alimente une turbomachine 8. Cette turbomachine 8 comporte une partie axiale entraînée en rotation lorsque la turbomachine est en fonctionnement. Cet axe entraîne à son tour, par l'intermédiaire de transmissions mécaniques non illustrées figure 2, les axes 9a, 9b des pales 4a, 4b des deux rotors contrarotatifs 3a, 3b.

Les gaz chauds générés par la turbomachine 8 lors de son fonctionnement sont évacués par une veine chaude annulaire 10 dont la sortie est située à l'arrière des deux rotors 3a, 3b.

Les détails de réalisation des «propfan» et de leurs composants : rotors, turbomachine, transmission, ainsi que leurs dimensions, matériaux etc. sortent du cadre de la présente invention. Les éléments décrits ici ne sont donc donnés qu'à titre informatif facilitant la compréhension de l'invention dans un de ses exemples, nullement limitatif, de mise en oeuvre.

Ainsi qu'il ressort de la description précédente, lors du vol de l'aéronef, l'air extérieur, dont la température est comprise entre +30°C à proximité du sol et -50°C en altitude, vient circuler le long des couronnes annulaires 5a, 5b des hélices, sensiblement selon la direction opposée à l'axe longitudinal X de déplacement de l'aéronef.

Dans le même temps, les gaz circulant dans la veine chaude annulaire 10 ont une température usuellement comprise entre 600 et 800°C.

Le dispositif de dégivrage selon l'invention tire parti de cette différence de température très significative à quelques centimètres de distance en utilisant des montages à effet Seebeck, permettant la transformation d'énergie thermique en énergie électrique.

On rappelle à titre préliminaire que l'effet thermoélectrique (effet Seebeck) est défini par la différence de potentiel observée entre les bornes d'un conducteur lorsqu'elles sont soumises à des températures différentes. Cet effet est utilisé dans les mesures de température par thermocouples. C'est l'effet inverse de l'effet Peltier, dans lequel l'application d'une différence de potentiel entre les bornes d'un conducteur entraîne la création d'une différence de température entre ces bornee.

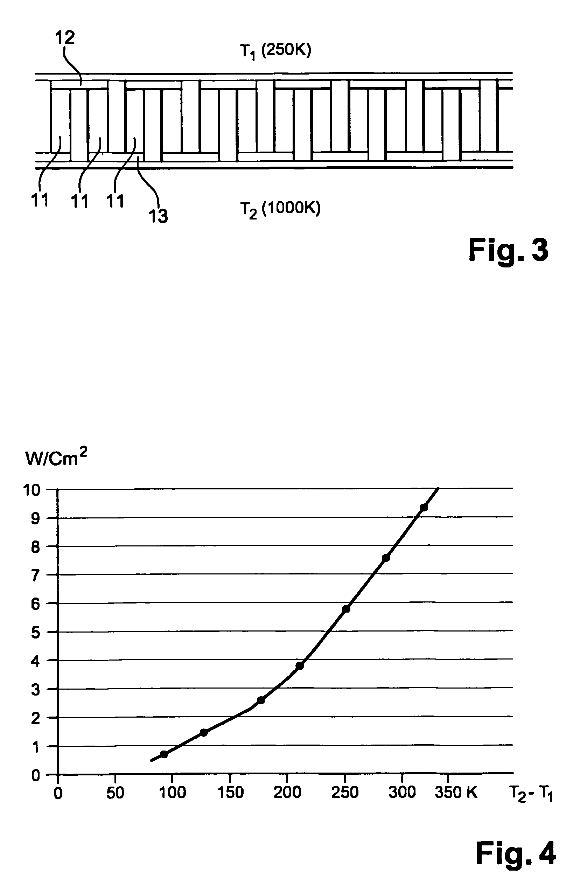

La génération de puissance électrique par effet Seebeck implique généralement de créer des circuits fermés comprenant un ensemble de conducteurs 11 reliés deux à deux par des jonctions 12, 13, soumise pour l'une d'entre elle à une première température *T1*, et, pour l'autre, à une seconde température *T2* (figure 3).

Les diverses études montrent que les matériaux fournissant le meilleur rendement thermoélectrique sont ceux qui remplissent des conditions de forte conductivité électrique, faible conductivité thermique et coefficient Seebeck élevé. On connaît actuellement plusieurs matériaux adaptés à être utilisés dans des diodes thermoélectriques. Parmi ceux-ci on peut citer le Tellurure de Cadmium Mercure (Hg _{0.86} Cd _{0.14} Te), le tellurure de Bismuth (Bi₂ Te₃), des nano-fils de Silicium etc.

Il est également à noter que les matériaux thermoélectriques présentent des caractéristiques favorables chacun dans une plage de températures donnée (le Tellure de Plomb vers 550 - 750 K, le Tellurure de Bismuth vers 250 - 350K etc.). Il est donc avantageux, dans les cas où la différence de température entre les zones chaudes (*T2*) et froide (*T1*), ce qui est par exemple le cas dans le présente exemple de mise en oeuvre sur un propulseur «propfan» (*T1* voisin de 250 K, et T2 voisin de 1000 K), d'utiliser plusieurs matériaux superposés pour constituer chaque conducteur 11.

Le rendement de conversion entre énergie thermique et énergie électrique est actuellement de l'ordre de 30% du rendement de Carnot idéal, pour une différence de température de 300K entre la zone chaude et la zone froide, ce qui correspond à un rendement théorique de 13% environ (conversion de 13% de l'énergie thermique en énergie électrique). Avec une différence de température de 700 K, un rendement de 18% est obtenu.

Du fait des caractéristiques de masse des diodes commerciales, un rendement de 30% du Carnot idéal correspond à une puissance massique de 1000 watts / kg de diodes installées.

La figure 4 illustre, pour une diode thermoélectrique du commerce de type Pb 0.5 Sn 0.5 Te, la densité de puissance électrique qui peut être obtenue par unité de surface selon la différence de température disponible. On constate que pour des valeurs d'écart de température de l'ordre de 350K, un puissance électrique de 10 watts / cm² peut être obtenue.

Ces valeurs démontrent la compatibilité de l'utilisation de diodes thermoélectriques avec les contraintes de dimensions, de volume et masse disponible et de puissance de dégivrage nécessaire sur un propulseur de type «propfan».

Celui-ci génère en effet au moins 200 kW de puissance thermique évacuée par la veine chaude annulaire 10.

Le dégivrage d'un rotor du «propfan» nécessite quant-à-lui environ 10 kW de puissance électrique. Le dégivrage des deux rotors 3a, 3b du «propfan» nécessite dont 20 kW. La masse de diodes thermoélectriques nécessaire à la fourniture de cette puissance électrique est donc d'environ 20 kg.

Cette valeur est compatible avec les contraintes de masse existants sur les aéronefs, ainsi qu'avec les contraintes volumiques liées à la conception des rotors 3a, 3b de « propfans ». Chaque couronne annulaire 5a, 5b présente en effet une paroi interne 15a, 15b, et une paroi externe 14a, 14b distantes d'une vingtaine de centimètres environ, pour un diamètre interne de la couronne annulaire 5a, 5b de plusieurs dizaines de centimètres et une largeur de la couronne annulaire 5a, 5b (selon l'axe longitudinal X) de quelques dizaines de centimètres.

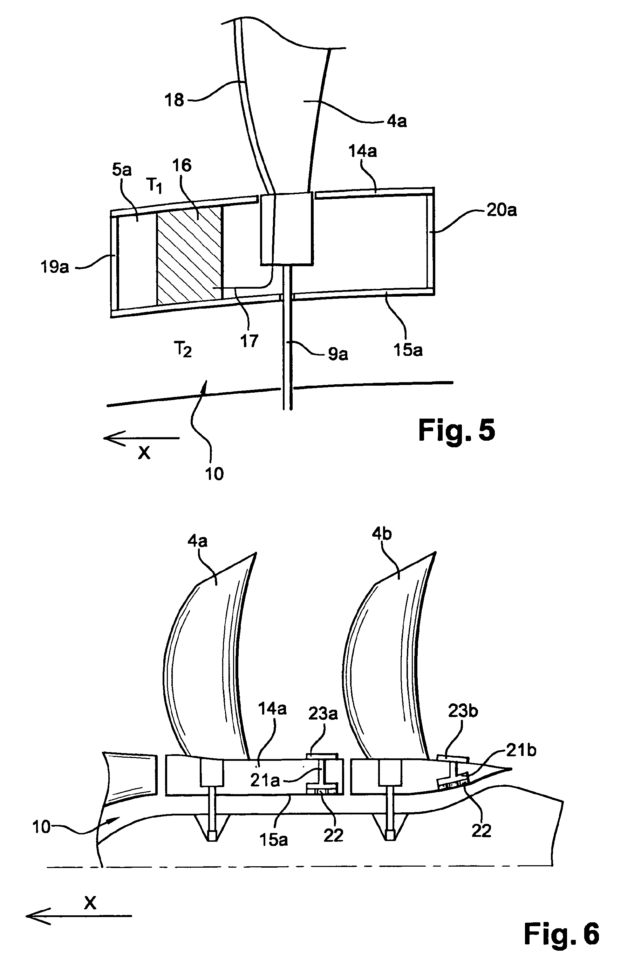

Le dispositif de dégivrage de pales 4a, 4b de rotor selon l'invention (figure 5) est ici décrit pour le rotor avant 3a du propulseur envisagé. Un dispositif identique est envisagé pour le rotor arrière 3b. Le dispositif utilise l'espace disponible au sein de la couronne annulaire 5a de chaque rotor 3a pour y disposer un générateur électrique 16 à diodes thermoélectriques 22.

Il comporte par ailleurs, dans le présent exemple nullement limitatif, un ensemble de câbles 17 destinés à transférer l'énergie électrique générée vers les pales 4a du rotor 3a.

Enfin, chaque pale 4a est équipée d'un ensemble de résistances 18 de chauffage des zones à dégivrer ou anti-givrer, par exemple le bord d'attaque de la pale 4a etc.

Le générateur électrique 16 est composé d'un ensemble de diodes thermoélectriques 22 disposées entre la paroi interne 15a et la paroi externe 14a de la couronne annulaire 5a. La figure 6 illustre un exemple de mise en oeuvre de ces diodes thermoélectriques 22 sur les deux rotors 3a, 3b du « propfan ».

Les diodes thermoélectriques 22 considérées sont par exemple du type Pb _{0.5} Sn _{0.5} Te, délivrant un rendement de 13% environ.

Selon l'épaisseur normale de fonctionnement des diodes thermoélectriques 22 considérées entre source froide (la paroi externe 14a, 14b de chaque couronne annulaire 5a, 5b) et source chaude (la paroi interne 15a, 15b de chaque couronne annulaire 5a, 5b face à la veine chaude annulaire 10), des caloducs 21 de type connu sont disposés entre une des parois de la couronne annulaire 5a et une face des diodes thermoélectriques 22. Du côté de la source froide, le dispositif comprend avantageusement un puits thermique 23, par exemple sous la forme de lames métalliques parallèles au flux d'air (c'est-à-dire à l'axe longitudinal de l'aéronef) créant une grande surface d'échange thermique avec l'environnement extérieur.

Il est clair qu'en variante, il est loisible d'inverser cette disposition. On dispose alors les diodes thermoélectriques 22 au voisinage de la paroi externe 14a, 14b de chaque couronne annulaire 5a, 5b. Dans ce cas, les puits thermiques 23 sont disposés au sein de la veine chaude annulaire 10, sur la paroi interne 15a, 15b de chaque couronne annulaire 5a, 5b, et les caloducs 21 servent à conduire la chaleur de cette source chaude vers les diodes thermoélectrique 22.

Ces diodes thermoélectriques 22 sont organisées en groupements en série et en parallèle par des moyens connus en soi pour obtenir en sortie du générateur électrique 16 une tension et un ampérage compatible avec les besoins de dégivrage des pales 4a du rotor 3a.

Préférentiellement, les deux parois 14a, 15a de la couronne annulaire 5a (respectivement les parois 14b, 15b de la couronne annulaire 5b) sont réalisées en matériau métallique, ou en tout état de cause très bon conducteur thermique. La paroi interne 15a est par exemple réalisée en titane, et la paroi externe 14a en aluminium. Les parois latérales 19a, 20a de cette couronne annulaire 5a sont réalisées en matériau de faible conductivité thermique, de manière à ce que le flux thermique passe préférentiellement par les diodes thermoélectriques 22.

Dans la mise en oeuvre considérée ici à titre d'exemple, le générateur électrique 16 d'étend de façon annulaire sur tout le périmètre intérieur de la couronne annulaire 5a, et sur une largeur de dix centimètres environ de ladite couronne annulaire 5a.

Dans le cas d'un rotor 3a comprenant 12 pales 4a, chaque secteur de 30° du générateur électrique 16 alimente une pale en énergie électrique avec une puissance d'environ 1 kW en vue de son dégivrage. La masse de diodes thermoélectriques 22 représentée est de l'ordre de 1 kg par secteur de 30° de la couronne annulaire 5a. Plus généralement, pour n pales, chaque secteur de 360°/n alimente une pale 4a en énergie électrique.

Le câble de transfert 17 de cette alimentation passe à travers ou au voisinage immédiat de l'axe 9a de la pale 4a, pour suivre son évolution lorsque le calage de celle-ci est modifié au cours du vol.

Le câble de transfert 17 alimente un ensemble de résistances chauffantes 18 de type connu en soi, ces résistances chauffantes 18 (ainsi que leur disposition sur la surface de la pale) et ce câble de transfert 17 étant similaires à ceux qui sont utilisés dans le cas de transfert de courant entre le stator (partie avant du propulseur) et le rotor 3a par contacts tournants.

En fonctionnement, le rendement du générateur électrique 16 devient significatif dès que la turbomachine 8 est mise en marche, la différence de température *T2 - T1* étant déjà, au sol, de plusieurs centaines de degrés K. Dans le mode de fonctionnement choisi ici à titre d'exemple, les résistances chauffantes 18 des pales 4a sont alimentées en permanence, et toutes les pales 4a sont alimentées simultanément, ce qui est rendu possible par la puissance disponible de 10 kW par rotor environ. Dans les dispositifs de l'art antérieur, les pales 4a étaient généralement alimentées de façon cyclique les unes après les autres du fait d'une puissance disponible plus faible. Outre que les performances d'anti-givrage en étaient significativement réduites, cette procédure entraînait la nécessité d'une électronique de contrôle de cette alimentation cyclique, ce qui augmentait la masse de l'ensemble.

Il ressort de la description que le générateur électrique selon l'invention permet de s'affranchir des problémes posés par les contacts tournants rapides de l'art antérieur. Il utilise une ressource énergétique partiellement perdue en tirant parti de la chaleur dégagée par le propulseur qui vient passer sous la couronne du rotor.

La maintenance du mécanisme de dégivrage des pales s'en trouve facilitée.

Par ailleurs, l'absence de pièces mobiles dans ce générateur électrique se traduit en une fiabilité augmentée.

Enfin, il ne nécessite pas de modification significative du propulseur pour son installation.

La portée de la présente invention ne se limite pas aux détails des formes de réalisation ci-dessus considérées à titre d'exemple, mais s'étend au contraire aux modifications à la portée de l'homme de l'art.

Dans la description, il a été mentionné un transfert d'énergie électrique du générateur 16 aux résistances chauffantes 18 de la pale 4a par un câble 17 traversant l'axe 9a de la pale 4a. Alternativement, le transfert de courant vers la pale 4a est réalisé, en sortie du générateur électrique 16, par balai conducteur et piste conductrice, sur l'axe de la pale 4a, tous deux de type connu en soi, les vitesses relatives de ces deux parties étant très faibles ici.

En variante, il est naturellement possible de remplacer les résistances chauffantes 18 utilisées pour le dégivrage des pales par tout autre moyen de dégivrage utilisant une source d'énergie électrique, sans modification du principe d'utilisation de la présente invention. De même il est possible de conserver un dégivrage cyclique des pales 4a, par exemple pour des cas de conditions givrantes particulières.

Dans une autre variante, à la place de caloducs 21 destinés à réduire la distance entre la source chaude (paroi interne 15a de la couronne annulaire 5a) et la source froide (paroi externe 14a e la couronne annulaire 5a) pour faciliter la mise en place des diodes thermoélectriques 22, on utilise des conduits canalisant soit de l'air chaud de la veine chaude annulaire 10, soit de l'air extérieur, vers une paroi sur laquelle sont disposées les diodes thermoélectriques 22.

Dans encore une autre variante, un dispositif de régulation de température entre les sources chaude et froide des diodes thermoélectriques 22 est intégré. En effet, ces diodes thermoélectriques 22 ont un point de rendement optimal pour une différence de température donnée, et tout écart à cette différence de température se traduit par une baisse de courant électrique généré.

Un tel dispositif de régulation peut comporter des conduits d'air mitigeant de l'air chaud et de l'air froid vers la source chaude des diodes, selon les consignes d'une électronique de contrôle du courant généré par les diodes. Ceci créé un dispositif de feedback qui maximise en temps réel le rendement énergétique des diodes thermoélectriques 22, quel que soient leur vieillissement et l'évolution de leur point de rendement maximal.

Il a été mentionné dans la description que chaque pale 4a était alimentée par un secteur des diodes thermoélectriques 22. Alternativement, on choisit plutôt, à titre de redondance, que toutes les diodes thermoélectriques 22 fournissent le courant généré à une même électronique de contrôle (non illustrée figure 5), qui mesure la puissance électrique disponible, et la répartit entre les pales 4a, voire sélectionne un mode d'alimentation cyclique des pales 4a en cas de puissance générée insuffisante pour une alimentation en parallèle permanente de toutes les pales.

De la même manière, l'électronique de contrôle communique, par des moyens non détaillés ici car sortant du cadre de la présente invention, la puissance générée par les diodes thermoélectriques 22 à destination de l'équipage avion.

## Revendications

1. Rotor de propulseur d'aéronef (1) de type dit "propfan" comportant une turbomachine (8) entraînant ledit rotor en rotation, ledit rotor (3a) comprenant une pluralité de pales (4a) disposées autour d'une couronne annulaire (5a) mobile avec ces pales, venant former par sa paroi externe (14a) une partie de l'enveloppe externe du propulseur, ladite enveloppe externe (6) étant soumise aux conditions atmosphériques externes au propulseur, ladite turbomachine (8) générant un flux de gaz chauds s'échappant par une veine chaude annulaire (10), concentrique de la couronne annulaire mobile (5a), et déterminée pour une partie de sa surface par la paroi interne (15a) de ladite couronne annulaire mobile (5a),
ledit rotor comportant un dispositif de dégivrage des pales avec
- des moyens (16) pour produire de l'énergie électrique à partir de l'énergie thermique dégagée par la veine chaude annulaire, ces moyens étant installés au sein de la partie annulaire mobile (5a),
- des moyens (18) pour transformer de l'énergie électrique en énergie thermique, lesdits moyens étant installés sur une partie au moins de la surface desdites pales (4a) ;
- des moyens (17) pour transférer l'énergie électrique produite par les moyens (16) pour produire de l'énergie électrique à partir de l'énergie thermique vers les moyens (18) pour transformer de l'énergie électrique en énergie thermique.

2. Rotor selon la revendication 1, **caractérisé en ce que** les moyens (16) pour produire de l'énergie électrique comportent un ensemble de diodes thermoélectriques (22) utilisant l'effet Seebeck, disposées entre la paroi interne (15a) et la paroi externe (14a) de la couronne annulaire (5a), faisant office respectivement de source chaude et de source froide pour ces diodes thermoélectriques (22), lesdites diodes thermoélectriques (22) étant organisées en groupements en série et en parallèle de manière à délivrer la puissance nécessaire pour le dégivrage des pales (4a) du rotor (3a).

3. Rotor selon la revendication 2, **caractérisé en ce que** les diodes thermoélectriques (22) sont du type Pb_{0.5}Sn_{0.5}Te.

4. Rotor selon l'une quelconque des revendications 2 à 3, **caractérisé en ce qu'**il comporte en outre des caloducs (21) disposés entre une des parois de la couronne annulaire (5a) et une face des diodes thermoélectriques (22).

5. Rotor selon l'une quelconque des revendications 2 à 3, **caractérisé en ce qu'**il comporte en outre des moyens pour canaliser soit de l'air chaud provenant de la veine chaude annulaire (10), soit de l'air extérieur, vers une paroi sur laquelle sont disposées les diodes thermoélectriques (22).

6. Rotor selon l'une quelconque des revendications 2 à 5, **caractérisé en ce que** les moyens (16) pour produire de l'énergie électrique sont répartis sur sensiblement tout le périmètre intérieur de la couronne annulaire (5a).

7. Rotor selon la revendication 6, **caractérisé en ce que**, ledit rotor (3a) comportant n pales (4a), chaque secteur de 360°/n de la couronne annulaire (5a) comporte des moyens (16) de production d'énergie électrique aptes à alimenter une pale (4a) en énergie électrique avec une puissance adaptée à son dégivrage.

8. Rotor selon l'une quelconque des revendications 2 à 7, **caractérisé en ce qu'**il comporte des moyens de régulation de la différence de température entre les sources chaude et froide des diodes thermoélectriques (22), ces moyens étant pilotés selon les consignes d'une électronique de contrôle du courant généré par les diodes thermoélectriques (22).

9. Rotor selon l'une quelconque des revendications 2 à 7, **caractérisé en ce qu'**il comporte en outre une électronique de contrôle à laquelle toutes les diodes thermoélectriques (22) fournissent le courant électrique produit, cette électronique de contrôle étant adaptée à mesurer la puissance électrique disponible, et à la répartir entre les pales (4a), et à sélectionner un mode d'alimentation cyclique des pales (4a) dans le cas où la puissance générée est inférieure à un seuil prédéterminé.

10. Rotor selon l'une quelconque des revendications 2 à 8, **caractérisé en ce qu'**il comporte des moyens de production d'énergie électrique configurés pour alimenter les résistances chauffantes (18) des pales (4a) en permanence, et alimenter toutes les pales (4a) simultanément.

11. Propulseur d'aéronef, **caractérisé en ce qu'**il comprend un dispositif selon l'une quelconque des revendications 1 à 10.

## Patentansprüche

1. Rotor eines Luftfahrzeug-Triebwerks (1) von der Art "Propfan", das eine Turbomaschine (8) aufweist, die den Rotor in Drehung antreibt, wobei der Rotor (3a) eine Vielzahl von Blättern (4a) enthält, die um einen mit diesen Blättern beweglichen ringförmigen Kranz (5a) angeordnet sind, der durch seine Außenwand (14a) einen Teil der Außenhaut des Triebwerks bildet, wobei die Außenhaut (6) den atmosphärischen Bedingungen außerhalb des Triebwerks ausgesetzt ist, wobei die Turbomaschine (8) einen Fluss warmer Gase erzeugt, der durch einen ringförmigen warmen Strom (10) austritt, welcher konzentrisch zum beweglichen ringförmigen Kranz (5a) ist und für einen Teil seiner Fläche durch die Innenwand (15a) des beweglichen ringförmigen Kranzes (5a) bestimmt wird,
wobei der Rotor eine Enteisungsvorrichtung der Blätter aufweist mit
- Einrichtungen (16) zur Erzeugung elektrischer Energie ausgehend von der vom ringförmigen warmen Strom abgegebenen thermischen Energie, wobei diese Einrichtungen innerhalb des beweglichen ringförmigen Teils (5a) eingebaut sind,
- Einrichtungen (18) zur Umwandlung elektrischer Energie in thermische Energie, wobei die Einrichtungen auf mindestens einem Teil der Fläche der Blätter (4a) eingebaut sind;
- Einrichtungen (17) zur Übertragung der von den Einrichtungen (16) zur Erzeugung elektrischer Energie ausgehend von der thermischen Energie erzeugte elektrische Energie zu den Einrichtungen (18) zur Umwandlung elektrischer Energie in thermische Energie.

2. Rotor nach Anspruch 1, **dadurch gekennzeichnet, dass** die Einrichtungen (16) zur Erzeugung elektrischer Energie eine Einheit von den Seebeck-Effekt verwendenden thermoelektrischen Dioden (22) aufweisen, die zwischen der Innenwand (15a) und der Außenwand (14a) des ringförmigen Kranzes (5a) angeordnet sind, welche als warme Quelle bzw. als kalte Quelle für diese thermoelektrischen Dioden (22) dienen, wobei die thermoelektrischen Dioden (22) in Gruppierungen in Reihe und parallel angeordnet sind, um die notwendige Leistung für die Enteisung der Blätter (4a) des Rotors (3a) zu liefern.

3. Rotor nach Anspruch 2, **dadurch gekennzeichnet, dass** die thermoelektrischen Dioden (22) von der Art Pb_{0,5}Sn_{0,5}Te sind.

4. Rotor nach einem der Ansprüche 2 bis 3, **dadurch gekennzeichnet, dass** er außerdem Wärmeleitrohre (21) aufweist, die zwischen einer der Wände des ringförmigen Kranzes (5a) und einer Seite der thermoelektrischen Dioden (22) angeordnet sind.

5. Rotor nach einem der Ansprüche 2 bis 3, **dadurch gekennzeichnet, dass** er außerdem Einrichtungen aufweist, um entweder vom ringförmigen warmen Strom (10) kommende Warmluft oder Außenluft zu einer Wand zu kanalisieren, auf der die thermoelektrischen Dioden (22) angeordnet sind.

6. Rotor nach einem der Ansprüche 2 bis 5, **dadurch gekennzeichnet, dass** die Einrichtungen (16) zur Erzeugung elektrischer Energie über im Wesentlichen den ganzen inneren Umfang des ringförmigen Kranzes (5a) verteilt sind.

7. Rotor nach Anspruch 6, **dadurch gekennzeichnet, dass**, wenn der Rotor (3a) n Blätter (4a) aufweist, jeder Sektor von 360°/n des ringförmigen Kranzes (5a) Einrichtungen (16) zur Erzeugung elektrischer Energie aufweist, die ein Blatt (4a) mit elektrischer Energie mit einer für seine Enteisung geeigneten Leistung versorgen kann.

8. Rotor nach einem der Ansprüche 2 bis 7, **dadurch gekennzeichnet, dass** er Einrichtungen zur Regelung der Temperaturdifferenz zwischen der warmen und der kalten Quelle der thermoelektrischen Dioden (22) aufweist, wobei diese Einrichtungen gemäß den Anweisungen einer Steuerelektronik des von den thermoelektrischen Dioden (22) erzeugten Stroms gesteuert werden.

9. Rotor nach einem der Ansprüche 2 bis 7, **dadurch gekennzeichnet, dass** er außerdem eine Steuerelektronik aufweist, der alle thermoelektrischen Dioden (22) den erzeugten elektrischen Strom liefern, wobei diese Steuerelektronik geeignet ist, um die verfügbare elektrische Leistung zu messen, und sie unter den Blättern (4a) zu verteilen, und einen zyklischen Speisemodus der Blätter (4a) in dem Fall zu wählen, in dem die erzeugte Leistung unter einer vorbestimmten Schwelle liegt.

10. Rotor nach einem der Ansprüche 2 bis 8, **dadurch gekennzeichnet, dass** er Einrichtungen zur Erzeugung elektrischer Energie aufweist, die konfiguriert sind, um die Heizwiderstände (18) der Blätter (4a) permanent zu speisen und alle Blätter (4a) gleichzeitig zu speisen.

11. Luftfahrzeug-Triebwerk, **dadurch gekennzeichnet, dass** es eine Vorrichtung nach einem der Ansprüche 1 bis 10 enthält.

## Claims

1. Rotor for an aircraft engine (1) of the propfan type comprising a turbomachine (8) driving said rotor in rotation, said rotor (3a) comprising a plurality of blades (4a) arranged around a ring-shaped member (5a) which can move with these blades and forms, with its outer wall (14a) portion of the outer envelope of the engine, said outer envelope (6) being exposed to the atmospheric conditions outside the engine, said turbomachine (8) generating a flow of hot gases expelled via an annular hot stream duct (10) which is concentric with the moving ring-shaped member (5a), and determined for part of its surface by the inner wall (15a) of said moving ring-shaped member (5a),
said rotor comprising a blade de-icing device having:
- means (16) for producing electrical energy from the thermal energy given off by the annular hot stream, these means being installed within the moving ring-shaped member (5a),
- means (18) for transforming electrical energy into thermal energy, said means being installed on at least part of the surface of said blades (4a),
- means (17) for transferring the electrical energy produced by the means (16) for producing electrical energy from the thermal energy toward the means (18) for transforming electrical energy into thermal energy.

2. Rotor according to Claim 1, **characterized in that** the means (16) for producing electrical energy comprise a collection of thermoelectric diodes (22) using the Seebeck effect which are arranged between the inner wall (15a) and the outer wall (14a) of the ring-shaped member (5a), the walls respectively serving as heat source and heat sink for these thermoelectric diodes (22), said thermoelectric diodes (22) being organized in groups in series and in parallel so as to provide the necessary power for de-icing the blades (4a) of the rotor (3a).

3. Rotor according to Claim 2, **characterized in that** the thermoelectric diodes (22) are of the Pb_{0.5}Sn_{0.5}Te type.

4. Rotor according to either of Claims 2 and 3, **characterized in that** it also comprises heat ducts (21) arranged between one of the walls of the annular disc (5a) and one face of the thermoelectric diodes (22).

5. Rotor according to either of Claims 2 and 3, **characterized in that** it also comprises means for channelling either hot air from the annular hot stream duct (10) or outside air toward a wall on which are arranged the thermoelectric diodes (22).

6. Rotor according to any one of Claims 2 to 5, **characterized in that** the means (16) for producing electrical energy are distributed substantially over the entire inner perimeter of the ring-shaped member (5a).

7. Rotor according to Claim 6, **characterized in that**, if said rotor (3a) comprises *n* blades (4a), each sector of 360°/*n* of the ring-shaped member (5a) comprises means (16) for producing electrical energy which are designed to supply a blade (4a) with electrical energy at a power that is suitable for de-icing the blade.

8. Rotor according to any one of Claims 2 to 7, **characterized in that** it comprises means for regulating the temperature difference between the heat source and heat sink of the thermoelectric diodes (22), these means being controlled in accordance with the instructions of electronics for controlling the current generated by the thermoelectric diodes (22).

9. Rotor according to any one of Claims 2 to 7, **characterized in that** it also comprises control electronics to which all the thermoelectric diodes (22) supply the electric current produced, this control electronics being designed to measure the available electric power and distribute it among the blades (4a), and to select a cyclic mode of supply to the blades (4a) in the event that the power generated is below a predetermined threshold.

10. Rotor according to any one of Claims 2 to 8, **characterized in that** it comprises means for producing electrical energy which are configured so as to permanently supply the heating resistances (18) of the blades (4a) and supply all the blades (4a) simultaneously.

11. Aircraft engine, **characterized in that** it comprises a device according to any one of Claims 1 to 10.
